# EUROPEAN PATENT SPECIFICATION

(11) **EP 2 447 140 B1**
(45) Date of publication and mention of the grant of the patent: **04.09.2013**
(21) Application number: 11183771.2
(22) Date of filing: 04.10.2011
(51) Int. Cl.: B62J 17/00, B62J 23/00, B62K 11/04, F16D 13/72

(54) **Straddle-ride type vehicle**
Grätschsitz-Fahrzeug
Véhicule de type à enfourcher

(30) Priority: 26.10.2010 JP 2010240113
(43) Date of publication of application: 02.05.2012
(73) Proprietor: Honda Motor Co., Ltd., Tokyo 107-8556 (JP)
(72) Inventor: Tsukui, Hiroaki c/o Honda R&D Co., Ltd., Saitama, 351-0193 (JP); Itagaki, Katsuhito c/o Honda R&D Co., Ltd., Saitama, 351-0193 (JP); Uchida, Soya c/o Honda R&D Co., Ltd., Saitama, 351-0193 (JP)
(74) Representative: Rupp, Christian

(56) References cited:
- EP-A1- 1 958 813
- EP-A1- 2 068 048
- EP-A2- 1 314 635

## Description

The present invention relates to an improvement in a straddle-ride type vehicle on which an engine incorporating a transmission with a clutch, in particular a dual clutch transmission, is mounted.

A dual clutch transmission having two clutches is mounted in some straddle-ride type vehicles. The dual clutch transmission is provided with two clutches, which are used to prevent the occurrence of time lag and the disconnection of power transmission during shifting, thereby allowing for rapid and smooth shifting (see e.g. Japanese Patent Laid-Open No. 2008-89068 = EP 2 068 048 A = Patent Document 1 (Fig. 5)).

As illustrated in Fig. 5 of Patent Document 1, an engine (13) (the parenthetic numeral denotes the symbol described in Patent Document 1 and this holds true for the following) incorporates a twin clutch type transmission (23) (hereinafter called "the dual clutch transmission (23)"), a gear shift device (41) driving the clutches, and a hydraulic supply device (46) adapted to supply oil to the gear shift device (41). The gear shift device (41) has a change mechanism (24) and a drive mechanism (39) driving the change mechanism (24).

An electronic control unit (42) is installed in a vehicle. The electronic control unit (42) controls the dual clutch transmission (23) and the gear shift device (41). The hydraulic supply device (46) has oil pumps (31, 32) .

The oil pumps (31, 32) are employed that have ability to cover the two clutches, specifically, a delivery rate. The oil pump of this type does not exercise the flow control of the delivery rate but allows the maximum amount of oil to flow continuously.

Incidentally, when viewed from a load side, time for the maximum load is short but time for a light load, i.e., for the load smaller than the maximum load, is long. Consequently, during a light load, a large amount of oil more than necessary circulates around the clutches. Oil comes into contact with the walls of a passage to produce heat; therefore, the circulation of oil increases the temperature around the clutches. An engine having two clutches produces heat more significantly to raise the temperature around the clutches in accordance with the increased circulation amount of oil than an engine having one clutch.

In a straddle-ride type vehicle, an engine incorporates clutches. A clutch cover housing the clutches employs a structure in which the clutch cover is close to the position of rider's legs. Because of housing the two clutches, the clutch cover may be raised to high temperature. Such a case desires a structure alleviating a thermal influence.

The document EP 1 314 635 A2 shows a motorcycle comprising an engine and a clutch. The motorcycle has a cover portion covering the engine and the clutch. An air intake is located at the front of the cover portion. The air intake is connected to a series of air ducts, defining an air flow between the cover portion and the engine and the clutch.

Moreover, the document EP 1 958 813 A1 shows a vehicle, especially a motorcycle comprising an engine and a clutch covered by a cover portion. The cover portion has an air duct towards the engine and the clutch. Moreover, a fan is shown, which is used for taking air in and transporting it through the above-specified gap to a discharge port.

It is an object of the present invention to provide a technology for making it hard for the heat around clutches to hit occupant's feet in a straddle-ride type vehicle on which an engine incorporating a transmission is mounted.

The invention according to claim 1 is characterized in that in a straddle-ride type vehicle in which an engine is fastened to a body frame, the body frame and the engine are covered by a body cover, a transmission having a clutch is incorporated in the engine, a lid member is installed on the engine laterally of the transmission, a clutch cover is mounted on the lid member at a position vehicle-laterally of the lid member, and foot rest portions on which rider's feet are put are installed close to the clutch cover, the clutch cover is formed with an air vent hole vehicle-rearward of the foot rest portions. The lid member is installed to project vehicle-widthwise outwardly of the foot rest portions, and the air vent hole is formed vehicle-rearward of the lid member projecting vehicle-widthwise outwardly.

The invention according to claim 2 is characterized in that a running-air intake port adapted to take in running-air is installed in a front portion of the body cover so that running-air taken in via the running-air intake port is discharged toward the side of the vehicle from the air vent hole.

The invention according to claim 3 is characterized in that the air vent hole is composed of a plurality of arc-like window portions formed in the clutch cover.

The invention according to claim 4 is characterized in that the lid member is provided with a level gauge for engine oil, and the clutch cover is formed with an insertion hole adapted to receive the level gauge inserted thereinto and removed therefrom.

The invention according to claim 5 is characterized in that the transmission is a dual clutch transmission having two clutches.

In the invention according to claim 1, the lid member is installed on the engine at a position vehicle-laterally of the transmission, the clutch cover is mounted to the lid member at a position vehicle-laterally of the lid member, and the foot rest portions are installed on the body cover at a position close to the clutch cover. The clutch cover is formed with the air vent hole at a position vehicle-rearward of the foot rest portions. The clutch cover is formed with the air vent hole vehicle-rearward of the foot rest portions. In addition, the air vent hole is formed vehicle-rearward of the projecting portion of the lid member projecting vehicle-widthwise outwardly. In other words, the air vent hole can be further isolated from the rider's feet. Therefore, the rider's feet can further be isolated from the heat of the clutch(es) diffused through the air vent hole. Consequently, the thermal influence due to the clutch(es) can be avoided to enhance the comfort of travel.

The engine and the rider's feet are isolated from each other by the clutch cover. The clutch cover is formed with the air vent hole at a position vehicle-rearward of the foot rest portions. The air around the clutch is allowed by the air vent hole to flow toward the rearward of the vehicle. Therefore, there is no concern that the air heated by the clutch hits the rider's feet located at a position forward of the air vent hole. Thus, the heat around the clutches is hard to hit the rider's feet, so that the comfort of travel can be enhanced.

In the invention according to claim 2, the running-air intake port is installed in the front portion of the body cover; therefore, running-air can be taken in the inside of the body cover. The air vent hole is formed in the rear of the vehicle; therefore, the running-air taken in the body cover can be discharged positively through the air vent hole. Allowing the running-air taken in from the front portion of the vehicle to flow through the air vent hole makes it hard for the heat diffused from the clutch cover to stay in the body cover. Therefore, heat becomes hard to be transmitted to an occupant. Thus, the comfort of travel can further be enhanced.

In the invention according to claim 3, the air vent hole is composed of a plurality of arc-like window portions formed in the clutch cover. Because of such a plurality of arc-like window portions, the window portions can be made inconspicuous compared with the case where the clutch cover is formed with a single circular or rectangular window portion or the like. Since the window portions are inconspicuous, the external appearance of the vehicle is enhanced.

In the invention according to claim 4, the lid member is provided with the level gauge, and the clutch cover is formed with the insertion hole for the level gauge. The level gauge is inserted into or removed from the clutch cover which is an external appearance member. Therefore, the visibility of the level gauge is enhanced so that the maintenance performance associated with the level gauge is enhanced.

In the invention according to claim 5, the transmission is a dual clutch transmission having two clutches.

The engine and the rider's feet are isolated from each other by the clutch cover. The clutch cover is formed with the air vent hole at a position vehicle-rearward of the foot rest portions. The air around the clutch is allowed to flow toward the rearward of the vehicle through the air vent hole. Therefore, there is no concern that the air heated by the clutch hits the rider's feet located at a position forward of the air vent hole. Thus, the heat around the clutch is hard to hit the rider's feet, so that the comfort of travel can be enhanced.
Fig. 1 is a right lateral view of a motorcycle according to the present invention.
Fig. 2 is an enlarged view of an essential portion of Fig. 1.
Fig. 3 is a view for assistance in explaining a mounting formation of an engine.
Fig. 4 is a front view of an essential portion of the motorcycle.
Fig. 5 is a cross-sectional view taken along line 5-5 in Fig. 1.
Fig. 6 is a cross-sectional view taken along line 6-6 in Fig. 1.

An embodiment of the present invention will hereinafter be described in detail. In the figures and embodiment, "upside," "downside," "front," "back or rear," "left" and "right" denote directions a driver mounting on a motorcycle looks. It is to be noted that the drawings shall be viewed based on the directions of reference numerals.

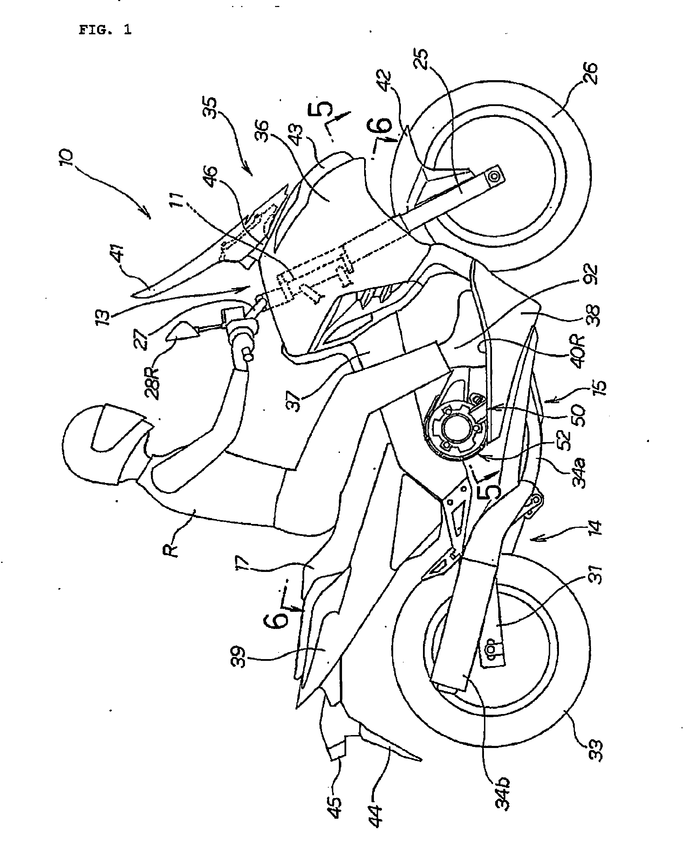

The embodiment of the present invention will be described based on the drawings.
Referring to Fig. 1, a motorcycle 10 includes a body frame 11; a front wheel steering portion 13 installed in a front portion of the body frame 11; a rear wheel suspending portion 14 installed in a rear portion of the body frame 11; an engine 15 suspended by the body frame 11; and a seat 17 which is disposed above the engine 15 and supported by the body frame 11 and on which a rider R sits. The motorcycle 10 is a straddle-ride type vehicle which the rider R straddles and mounts.

The front wheel portion 13 includes a fork member 25 steerably attached to the body frame 11; a front wheel 26 supported rotatably and steerably by the lower end of the form member 25; and a steering handlebar 27 attached to the upper end of the fork member 25. Rear view mirrors 28L, 28R (only reference numeral 28R on the front side in the figure is shown) are attached to the steering handlebar 27.

The rear wheel suspending portion 14 includes a swing arm 31 extending from the body frame 11 toward the rear of the vehicle; a rear cushion, not shown, spanned between the swing arm 31 and the body frame 11; and a rear wheel 33 rotatably supported by the rear end of the swing arm 31 and driven by the engine 15. An exhaust pipe 34a extends from the engine 15 toward the rear of the vehicle. A muffler 34b is attached to the rear end of the exhaust pipe 34a and extends toward the rear of the vehicle.

A description is next given of a body cover which covers the vehicle.
The body cover 35 includes a front cover 36, a side cover 37, an under cover 38 and a rear side cover 39. The front cover 36 is installed in the front portion of the vehicle to cover the front portion of the vehicle. The side cover 37 extends toward the rear of the vehicle so as to be continuous with the front cover 36. The under cover 38 contains rider's foot rest portions 40L, 40R (only reference numeral 40R on the front side in the figure is shown) installed below the side cover 37. The rear side cover 39 extends from the rear end portion of the side cover 37 toward the rear of the vehicle so as to be continuous therewith.
A screen stay 46 extends above the front cover 36. A screen 41 is attached to the screen stay 46.

A front fender 42 is attached to the fork member 25 at a position above the front wheel 26. The front cover 36 is mounted to a head pipe 61 and a headlight 43 is attached to the front cover 36. A rear fender 44 is attached to the body frame 11 at a position above the rear wheel 33. A taillight 45 is installed at the upper portion of the rear fender 44.

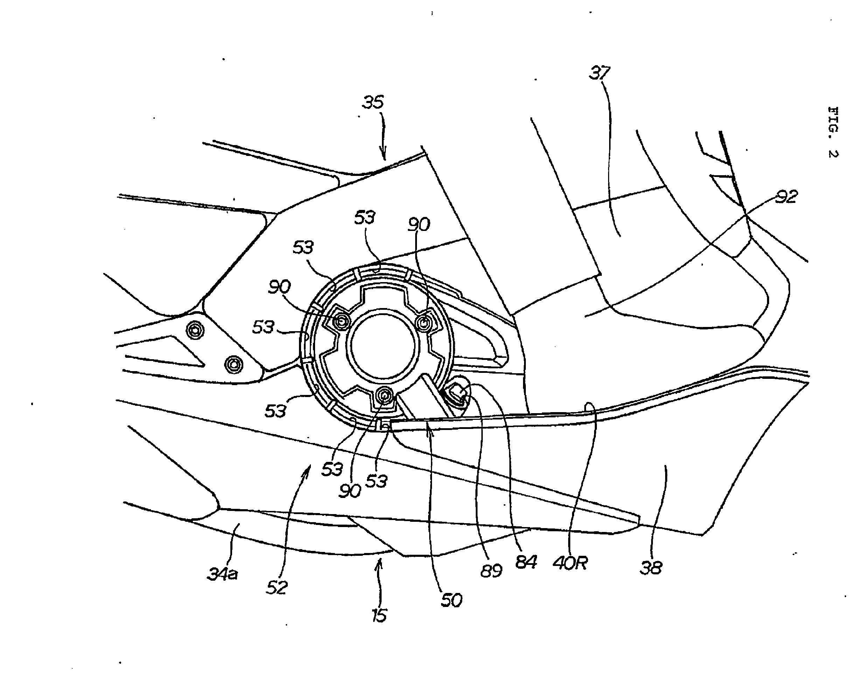

A description is next given of a clutch cover mounted to the engine and the foot rest portions installed on the body cover.
Referring to Fig. 2, the engine 15 is covered by the body cover 35 and the clutch cover 50. The foot rest portions 40L, 40R on which rider's feet are put are installed on the body cover 35 close to the clutch cover 50.

The clutch cover 50 is formed with an air-vent hole 52 vehicle-rearward of the foot rest portions 40L, 40R. In the present embodiment, the air-vent hole 52 is composed of a plurality of arc-like window portions 53.
Since the air-vent hole 52 is composed of the plurality of arc-like window portions 53, it is possible to make the window portions inconspicuous compared with circular window portions, rectangular window portions or the like. Since the window portions are inconspicuous, the external appearance of the vehicle can be enhanced.

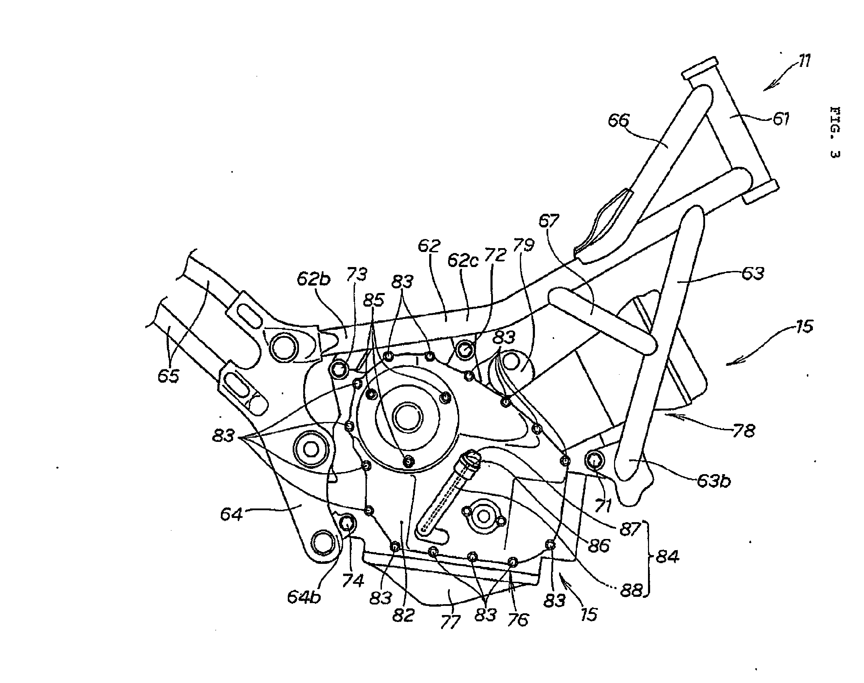

A description is next given of a structure of fastening the engine to the body frame.
Referring to Fig. 3, the body frame 11 includes, as main elements, a main frame 62, a down frame 63, a pivot frame 64 and a seat rail 65. The main frame 62 extends vehicle-obliquely downward and rearward from the head pipe 61. The down frame 63 extends vehicle-obliquely rearward and downward from the main frame 62. The pivot frame 64 extends downward from a rear end portion 62b of the main frame 62 and supports the front end portion of the swing arm (reference numeral 31 in Fig. 1). The seat rail 65 extends toward the rear of the vehicle from the pivot frame 64. A first reinforcing frame 66 is spanned between the head pipe 61 and the main frame 62. A second reinforcing frame 67 is spanned between the main frame 62 and the down frame 63.

A first fastening point 71 is provided at a lower end 63b of the down frame. A second fastening point 72 is provided at a vehicle-longitudinally intermediate portion 62c of the main frame. A third fastening point 73 is provided at the rear end portion 62b of the main frame. A fourth fastening point 74 is provided at a lower end 64b of the pivot frame. The engine 15 is fastened to the first to fourth fastening points 71 to 74. In short, the engine 15 is fastened to the body frame 11.

The engine 15 includes, as main elements, a crankcase 76, an oil pan 77 mounted from below to the lower surface of the crankcase 76, and a cylinder portion 78 extending vehicle-obliquely forward and upward from the front portion of the crankcase 76. A starter motor 79 is mounted to the crankcase 76 at a position between the cylinder portion 78 and the crankcase 76.

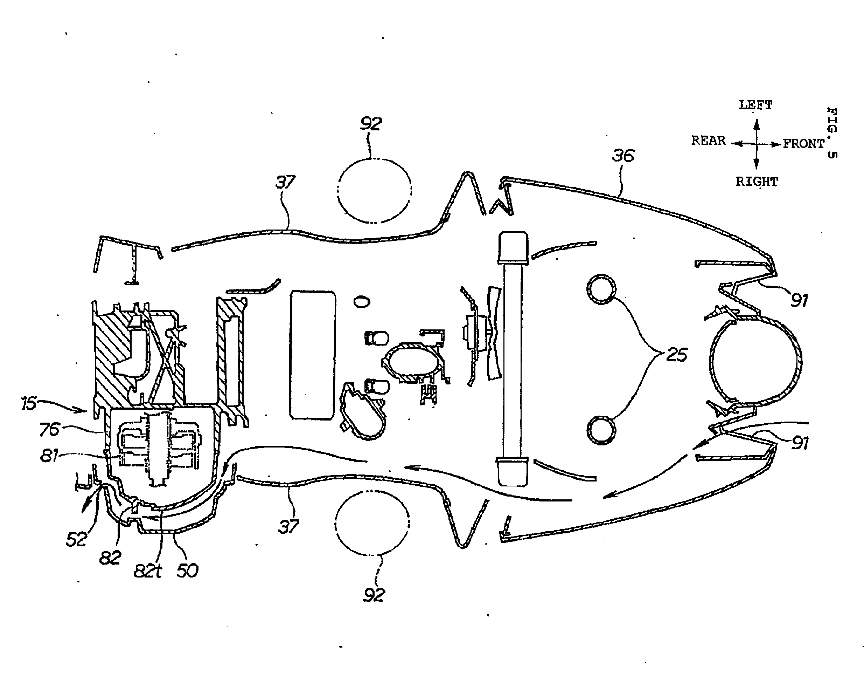

A lid member 82 is mounted to the right lateral surface of the crankcase 76 so as to cover a dual clutch transmission (reference numeral 81 in Fig. 5) incorporated in the rear portion of the engine 15. The lid member 82 is fastened at its edge portion to the crankcase 76 by means of a plurality of fastening bolts 83. The lid member 82 is equipped with a level gauge 84 for engine oil.
The lid member 82 is formed at its vehicle-lateral position with three fastening seat portions 85 to which the clutch cover (reference numeral 50 in Fig. 2) is mounted.

With additional reference to Fig. 2, the body frame 11 and the engine 15 is covered by the body cover 35. The lid member 82 is provided on the engine 15 laterally of the dual clutch transmission (reference numeral 81 in Fig. 5).
The clutch cover 50 is brought into contact with the lid member 82 and is fastened to the lid member 82 by means of bolts 90 at the fastening seat portions 85 provided on the lid member 82.

The lid member 82 of the engine 15 to which the clutch cover 50 is mounted is bored with a level gauge hole 86. The level gauge 84 is screwed into the level gauge hole 86. The level gauge 84 is composed of a cap 87 and a gauge member 88. The cap 87 is screwed into the level gauge hole 86 formed in the led member 82. The gauge member 88 extends downward from the cap 87 and detects an oil level.

The clutch cover 50 is formed at a position corresponding to the level gauge hole 86 with an insertion hole 89 adapted to receive the level gauge 84 inserted thereinto and removed therefrom. In this way, the level gauge 84 can be inserted into or removed from the clutch cover 50 which is an external appearance member. Since the clutch cover 50 is bored with the insertion hole 89, the visibility of the level gauge 84 is enhanced so that the maintenance performance for the level gauge 84 is enhanced.

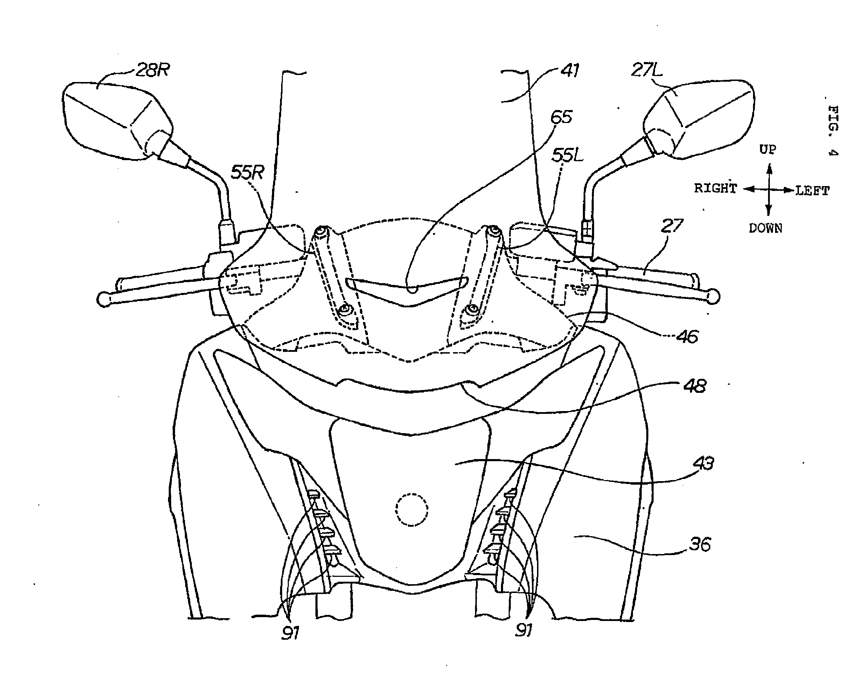

A description next is given of running-air intake ports bored in the body cover.
Referring to Fig. 4, running-air intake ports 91 adapted to take in running air are provided in the front portion of the front cover 36 as a constituent element of the body 35. The running-air intake ports 91 are provided on the left and right sides of the headlight 43.

The screen 41 is mounted to the body frame 11 via the screen stay 46. Stay brackets 55L, 55R in contact with the screen 41 are shaped to follow the shape of the screen 41. A running-air introduction portion 48 adapted to lead running-air to vehicle-rear side of the screen 41 is formed between the screen 41 and the front cover 36. Separately from the running-air introduction portion 48, an upper running-air introduction window 65 adapted to lead running-air to the screen stay 46 is provided in the screen 41.

A description is next given of the lid member covering the engine 15 from the right side and the clutch cover which covers the lid member from the right side.
Referring to Fig. 5, the dual clutch transmission 81 having two clutches is incorporated in the crankcase 76 of the engine 15. The lid member 82 is mounted to the crankcase 76 right-laterally of the dual clutch transmission 81 so as to cover the dual clutch transmission 81. The clutch cover 50 is disposed at a position vehicle-laterally of the dual clutch transmission 81 and vehicle-widthwise externally of the lid member 82.

The running-air intake ports 91 capable of taking in running-air are provided in the front portion of the front cover 36 as a constituent element of the body cover 35. The running air taken in via the running-air intake ports 91 passes through the inside of the side cover 37, and between the lid member 82 of the engine 15 and the clutch cover 50 and is discharged from the air-vent hole 52 toward the side of the vehicle.

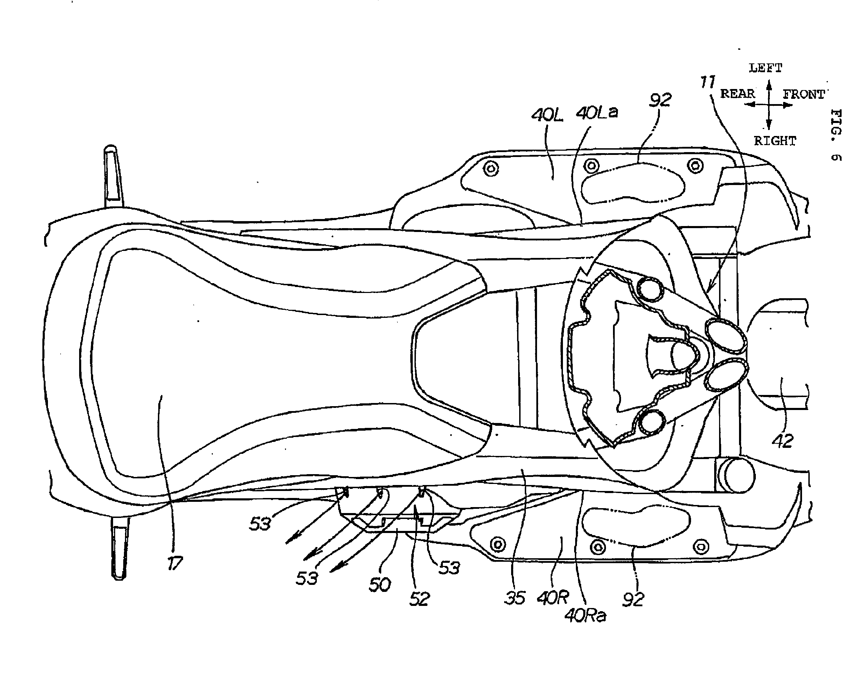

A description is next given of the operation of the motorcycle described above.
As illustrated in Fig. 6, the lid member (reference numeral 82 in Fig. 5) which covers the dual clutch transmission 81 is installed to project vehicle-widthwise outwardly of each of the respective inner ends 40La, 40Ra of the foot rest portions 40L, 40R. The air-vent hole 52 bored in the clutch cover 50 disposed further vehicle-widthwise outwardly of the lid member 82 is formed vehicle-rearward of each of the foot rest portions 40L, 40R.

The foot rest portions 40L, 40R are installed close to the clutch cover 50. The engine 15 and the rider's foot 92 are isolated from each other by the clutch cover 50. Additionally, the clutch cover 50 is formed with the air vent hole 52 at a position vehicle-rearward of the foot rest portions 40L, 40R. Air around the clutches is allowed by the air vent hole 52 to flow toward the rear of the vehicle. Therefore, there is no concern that the air heated by the clutch hits the rider's feet. Consequently, it is possible to avoid the influence of heat from the engine 15, so that the comfort of travel can be enhanced.

Returning to Fig. 5, the front cover 36 which covers the front portion of the vehicle is provided with the running-air intake ports 91. Therefore, running-air can be taken in the inside of the body cover 35. The air vent hole 52 is formed in the rear portion of the vehicle. Therefore, the running-air taken in the inside of the body cover 35 can positively be discharged from the air vent hole 52. The running-air taken in from the front portion of the vehicle is allowed to flow from the air-vent hole 52. Therefore, the heat diffused from the clutch cover 50 is hard to stay inside the body cover 35. Thus, heat is hard to be transmitted to an occupant, so that the comfort of travel is further enhanced.

The clutch cover 50 is formed with the air vent hole 52 vehicle-rearward of the foot rest portions 40L, 40R. In addition, the air vent hole 52 is formed vehicle-rearward of a projecting portion 82t of the lid member projecting vehicle-widthwise outwardly. In short, the air bent hoe 52 can be further isolated from the rider's feet 92. Consequently, the influence of heat from the engine 15 can be avoided, so that the comfort of travel can be enhanced.

Incidentally, the present invention is applied to the motorcycle in the embodiment; however, the invention can be applied to three-wheeled vehicles. It is reasonable that the invention is applied to general straddle-ride type vehicles.
In claim 1, it is reasonable to omit the running-air intake ports.
In claim 3, the shape of the air vent hole is not limited to the plurality of arc-like window portions but may be an arbitrarily-shaped air vent hole.

In the present embodiment, the transmission is the dual clutch transmission having two clutches; however, it may reasonably be a transmission having a clutch. In addition, it is reasonable to apply the invention to transmissions having a clutch with a large amount of heat generation.

The present invention is suitable for motorcycles.

10 ... Straddle-ride type vehicle (motorcycle), 11 ... Body frame, 15 ... Engine, 35 ... Body cover, 40L, 40R ... Foot rest portion, 50 ... Clutch cover, 52 ... Air vent hole, 81 ... Dual clutch transmission, 82 ... Lid member, 84 ... Engine oil level gauge, 89 ... Insertion hole, 91 ... Running-air intake port

## Claims

1. A straddle-ride type vehicle in which an engine (15) is fastened to a body frame (11), the body frame (11) and the engine (15) are covered by a body cover (35), a transmission (81) having a clutch is incorporated in the engine (15), a lid member (82) is installed on the engine (15) laterally of the transmission (81), a clutch cover (50) is mounted to the lid member (82) at a position vehicle-laterally of the lid member (82), and foot rest portions (40L, 40R) on which rider's feet are put are installed close to the clutch cover (50),
wherein the clutch cover (50) is formed with an air vent hole (52) vehicle-rearward of the foot rest portions (40L, 40R),
wherein the lid member (82) is installed to project vehicle-widthwise outwardly of the foot rest portions (40L, 40R), and
the air vent hole (52) is formed vehicle-rearward of the lid member (82) projecting vehicle-widthwise outwardly.

2. The straddle-ride type vehicle according to claim 1, wherein a running-air intake port (91) adapted to take in running-air is installed in a front portion of the body cover (35) so that running-air taken in via the running-air intake port (91) is discharged toward the side of the vehicle from the air vent hole (52).

3. The straddle-ride type vehicle according to any of the preceding claims, wherein the air vent hole (52) is composed of a plurality of arc-like window portions formed in the clutch cover (50).

4. The straddle-ride type vehicle according to any of the preceding claims, wherein the lid member (82) is provided with a level gauge (84) for engine oil, and the clutch cover (50) is formed with an insertion hole (89) adapted to receive the level gauge (84) inserted thereinto and removed therefrom.

5. A straddle-ride type vehicle according to any of the preceding claims, wherein the transmission is a dual-clutch transmission having two clutches.

## Patentansprüche

1. Grätschsitz-Fahrzeug, bei dem ein Motor (15) an einem Fahrzeugaufbaurahmen (11) befestigt ist, der Fahrzeugaufbaurahmen (11) und der Motor (15) von einer Karosserieabdeckung (35) abgedeckt sind, ein Getriebe (81) mit einer Kupplung in den Motor (15) eingebaut ist, ein Deckelteil (82) seitlich des Getriebes (81) an dem Motor (15) montiert ist, eine Kupplungsabdeckung (50) an dem Deckelteil (82) an einer Position bezüglich des Fahrzeugs seitlich des Deckelteils (82) angebracht ist, und Fußstützenabschnitte (40L, 40R), auf denen der Fahrer seine Füße abstellt, nahe der Kupplungsabdeckung (50) montiert sind,
wobei die Kupplungsabdeckung (50) mit einer Entlüftungsöffnung (52) bezüglich des Fahrzeugs hinter den Fußstützenabschnitten (40L, 40R) ausgebildet ist,
wobei das Deckelteil (82) derart montiert ist, dass es in Fahrzeugbreitenrichtung nach außen an den Fußstützenabschnitten (40L, 40R) vorsteht, und
die Entlüftungsöffnung (52) bzgl. des Fahrzeugs hinter dem Deckelteil (82) ausgebildet ist, das in Fahrzeugbreitenrichtung nach außen vorsteht.

2. Grätschsitz-Fahrzeug gemäß Anspruch 1, wobei ein Einströmluft-Ansaugkanal (91) zur Aufnahme von Einströmluft in einem vorderen Abschnitt der Karosserieabdeckung (35) derart montiert ist, dass über den Einströmluft-Ansaugkanal (91) aufgenommene Einströmluft zur Seite des Fahrzeugs aus der Entlüftungsöffnung (52) abgeführt wird.

3. Grätschsitz-Fahrzeug gemäß einem der vorhergehenden Ansprüche, wobei sich die Entlüftungsöffnung (52) aus einer Vielzahl von bogenförmigen, in der Kupplungsabdeckung (50) ausgebildeten Fensterabschnitten zusammensetzt.

4. Grätschsitz-Fahrzeug gemäß einem der vorhergehenden Ansprüche, wobei das Deckelteil (82) mit einem Füllstandmesser (84) für Motorenöl versehen ist, und die Kupplungsabdeckung (50) mit einer Einführöffnung (89) ausgebildet ist, die den in diese eingeführten und aus dieser herausgezogenen Füllstandmesser (84) aufnehmen kann.

5. Grätschsitz-Fahrzeug gemäß einem der vorhergehenden Ansprüche, wobei das Getriebe aus einem Doppelkupplungsgetriebe mit zwei Kupplungen besteht.

## Revendications

1. Véhicule de type à enfourcher dans lequel un moteur (15) est fixé à un cadre (11), le cadre (11) et le moteur (15) sont recouverts par un couvercle (35), une transmission (81) ayant un embrayage est incorporée dans le moteur (15), un élément formant couvercle (82) est monté sur le moteur (15) latéralement à la transmission (81), un couvercle d'embrayage (50) est monté sur l'élément formant couvercle (82) à une position latéralement au véhicule de l'élément formant couvercle (82), et des portions formant repose-pieds (40L, 40R), sur lesquelles sont posées les pieds du motocycliste, sont montées à proximité du couvercle d'embrayage (50), dans lequel le couvercle d'embrayage (50) est formé avec un orifice d'aération (52) à l'arrière du véhicule des portions formant repose-pieds (40L, 40R), dans lequel l'élément formant couvercle (82) est monté pour faire saillie dans la largeur du véhicule vers l'extérieur des portions formant repose-pieds (40L, 40R), et l'orifice d'aération (52) est formé vers l'arrière du véhicule de l'élément formant couvercle (82) faisant saillie dans la largeur du véhicule vers l'extérieur.

2. Véhicule de type à enfourcher selon la revendication 1, dans lequel un orifice d'admission d'air circulant (91) adapté pour faire entrer de l'air circulant est monté dans une portion avant du couvercle (35) de sorte que l'air circulant entré par l'intermédiaire de l'orifice d'admission de l'air circulant (91) est déchargé vers le côté du véhicule depuis l'orifice d'aération d'air (52).

3. Véhicule de type à enfourcher selon l'une quelconque des revendications précédentes, dans lequel l'orifice d'aération d'air (52) est composé d'une pluralité de portions formant fenêtres en arc, formées dans le couvercle d'embrayage (50).

4. Véhicule de type à enfourcher selon l'une quelconque des revendications précédentes, dans lequel l'élément formant couvercle (82) est doté d'une sonde de niveau (84) de l'huile du moteur, et le couvercle d'embrayage (50) est formé avec un trou d'insertion (89) adapté pour recevoir la sonde de niveau (84) insérée à l'intérieur et retirée de là.

5. Véhicule de type à enfourcher selon l'une quelconque des revendications précédentes, dans lequel la transmission est une transmission à double embrayage ayant deux embrayages.
